# EUROPEAN PATENT SPECIFICATION

(11) **EP 2 252 057 B1**
(45) Date of publication and mention of the grant of the patent: **27.06.2012**
(21) Application number: 10161059.0
(22) Date of filing: 26.04.2010
(51) Int. Cl.: H04N 7/24, H04L 29/08, H04N 7/173, H04L 29/06, H04N 21/472, H04N 21/845, H04N 21/438, H04N 21/258, H04N 21/63

(54) **Method and system for storing and distributing electronic content**
Verfahren und System zur Speicherung und Verteilung von elektronischen Inhalten
Système et procédé pour stocker et distribuer un contenu électronique

(30) Priority: 15.05.2009 EP 09305439
(43) Date of publication of application: 17.11.2010
(73) Proprietor: Thomson Licensing, 92130 Issy-les-Moulineaux (FR)
(72) Inventor: Simon, Gwendal, 29280 Plouzane (FR); Chen, Yiping, 35000 Rennes (FR); Straub, Gilles, 35690 Acigne (FR)
(74) Representative: Lindemann, Robert

(56) References cited:
- MATTHEW S ALLEN ET AL: "Deploying Video-on-Demand Services on Cable Networks" ICDCS '07. 27TH INTERNATIONAL CON FERENCE ON DISTRIBUTED COMPUTING SYSTEMS, IEEE, PI, 25 June 2007 (2007-06-25), - 27 June 2007 (2007-06-27) XP031114045 ISBN: 978-0-7695-2837-3
- KYOUNGWON SUH ET AL: "Push-to-Peer Video-on-Demand System: Design and Evaluation" IEEE JOURNAL ON SELECTED AREAS IN COMMUNICATIONS, IEEE SERVICE CENTER, PISCATAWAY, US, vol. 25, no. 9, 1 December 2007 (2007-12-01), pages 1706-1716, XP011198313 ISSN: 0733-8716
- W-P KEN YIU ET AL: "VMesh: Distributed Segment Storage for Peer-to-Peer Interactive Video Streaming" IEEE JOURNAL ON SELECTED AREAS IN COMMUNICATIONS, IEEE SERVICE CENTER, PISCATAWAY, US, vol. 25, no. 9, 1 December 2007 (2007-12-01), pages 1717-1731, XP011198314 ISSN: 0733-8716
- KANGASHARJU J ET AL: "Object replication strategies in content distribution networks" COMPUTER COMMUNICATIONS, ELSEVIER SCIENCE PUBLISHERS BV, AMSTERDAM, NL, vol. 25, no. 4, 1 March 2002 (2002-03-01), pages 376-383, XP004327035 ISSN: 0140-3664
- JARIYAKUL N ET AL: "On the Internet Delay-Based Clustering" SIMULATION SYMPOSIUM, 2005. PROCEEDINGS. 38TH ANNUAL SAN DIEGO, CA, USA 04-06 APRIL 2005, PISCATAWAY, NJ, USA,IEEE, 4 April 2005 (2005-04-04), pages 51-59, XP010787235 ISBN: 978-0-7695-2322-4

## Description

The invention relates to a method and a system for distributing, storing and retrieving of electronic content via a network. In particular, the invention relates to efficiently placing different parts of content that is divided into fragments.

For the sake of clarity and simplicity the following specification refers to video-on-demand (VoD) services. However, the invention may also apply to any general network used for serving files. In particular, the files do not necessarily have to be video files.

Matthews S. Allen et al, in "Deploying Video-on-Demand Services on Cable Networks", ICDCS '07, 27th International Conference on Distributed Computing Systems, IEEE, 25-27 June 2007, disclose a method for distributing videos on demand, in which requests are served from set top box peers when available and otherwise from a central video server. Videos are divided into 5-minute segments distributed among a collection of peers. The segments are distributed across the STBs for achieving load balancing as a function of the popularity of each segment, which in turn depends on the popularity of the video.

J. Kangasharju et al, in "Object replication strategies in content distribution networks", Computer Communicaitons, Elsevier Science Publishers BV, Amsterdam, NL, vol. 25, no. 4, 1 March 2001, pp. 376-383, disclose a replica placement method in a content distribution network, which aims at placing the content servers as close as possible to the users in number of hops. Among the four placement heuristics discussed is the "Greedy-Single" placement method, in which the nodes store objects in decreasing order of a popularity-distance product.

N. Jariyakul et al, in "On the Internet Delay-Based Clustering", 2005 Proceedings 38th Annual Simulation Symposium, San Diego, CA, USA, 04-06 April 2005, IEEE, pp. 51-59, disclose a placement method called "greedy-based d-median", which aims at ensuring the the distance for retrieving a facility within a cluster of network nodes is bounded by a maximum distance. At each step, a node is selected for storage of a facility among those which are further than the maximum distance from said facility. Selection among the nodes is performed so that the selected node yields the minimum connection cost to all further nodes of a cluster.

On-demand video delivery over a content delivery network (CDN) that is solely based on set-top-boxes distributed within the network has recently been introduced. In general, in a VoD service, a set of managed devices, also referred to as set-top boxes, is capable of storing video content. The set-top boxes are also capable of uploading this content to other set-top boxes. Each video is divided into a number of complementary fragments, also referred to as substreams. In order to reproduce the video the set-top box needs to download missing substreams until all substreams are available at that specific set-top box.

The fragments, or substreams, may be randomly stored in the set-top-boxes of the network. In order to retrieve a file, requests from clients are redirected to the nearest boxes which store fragments of the requested file. A client requesting a file may completely download all fragments of a file, or, e.g. in case of a video file that is to be streamed, may request streaming of each respective fragment in an ordered manner.

However, random distribution of fragments of the files may result in inefficient allocation of fragments to set-top-boxes, which in turn may result in increased cost for delivery of a requested file. For example, one fragment of a video file may be placed much farther away from a requesting client than other fragments of the same video, while two set-top-boxes that are relatively close to the requesting client host identical fragments. In this example, the two neighbouring set-top boxes hosting identical fragments cannot download missing fragments from each other, but have to download content from another set-top box, which is probably very far away. This scenario would produce some unnecessary network traffic between the requesting client and the set-top-box that is placed much farther away, as compared with a scenario in which set-top-boxes neighbouring to a requesting client are capable of providing all required fragments of a file. Network traffic to relatively remote hosts may occupy scarce network resources, in particular when a number of hubs or routers needs to be crossed, or when the network traffic needs to be routed across different domains.

Unless otherwise noted, the expression "distance" is interchangeably used throughout the following specification in the sense of geographical distance, network distance, e.g. in router hops, available bandwidth, or transmission delay. The term distance may also refer to network cost, i.e. the cost to transport data from a network device hosting a fragment of a file to a network device that requested the file or the fragment of the file. Network cost can be computed by taking into account cost for crossing domains at the router level or by taking into account the number of traversed routers. The cost may also be related to the "network load", i.e. the cost increases when the number of network nodes in the data path between boxes increases. The network cost may also dynamically change depending on the time of day or the amount of data that is currently exchanged through a segment of the network.

One known algorithm for placing content within a content distribution network is known as k-PUFLP, or "k-Product Uncapacitated Facility Location Problem" algorithm. This algorithm is disclosed for example in A. Klose, A. Drexl, "Facility location models for distribution system design", European Journal of Operational Research, vol. 162, no. 1, pp. 4 - 29, 2005. The k-PUFLP algorithm is a "centralize" algorithm, i.e. a central entity knows about the location of all set-top boxes within the network. Any time a new set-top box is added to the network the distribution of files amongst the set-top boxes needs to be recalculated for all set-top boxes. Since placing, replacing and reshuffling of content in set-top boxes is also costly, this k-PUFLP algorithm is not well suited for efficient content placement in a content distribution network in which set-top boxes act as clients and as hosts.

It is desirable to provide a method and a system for optimized and distributed data placement, so that each set-top box would participate in the overall placement process by taking the right decision without having to rely on a central control instance. In the following, the term network station is used interchangeably with set-top box.

Assuming that the locations of all set-top boxes are known it is an object of the invention to provide a method for assigning a "good" substream, or fragment, to every set-top box in order to minimise the global cost of such content distribution service.

The inventive method for content placement takes into account on the network cost/distance among boxes. In particular, the distribution of substreams, or fragments, to set the boxes takes into account the network distance/cost to its neighbouring boxes and what content is already stored by these neighbouring boxes. A result of the inventive method is minimising the local cost for each set-top box through selecting appropriate substreams, or fragments, for local storage.

In accordance with one or more embodiments of the invention it is assumed that each set-top box stores just one substream, or fragment, out of the total number of substreams, or fragments, e.g. for taking into account limited storage capacity. However, the size of substreams, or fragments, may vary. Also, substreams, or fragments, do not have to consist of a sequence of contiguous elements or parts of the file.

The inventive method may be used for distributing electronic content over a network having at least two network stations. The network stations are adapted for storing content and for retrieving stored content. The stored content is organised in files, wherein the files are divided into fragments. The totality of fragments of a given file is required for reconstructing the given file. One or more fragments of a given file are stored in respective different network stations. According to the method, when a further network station is added to the network, the added network station determines which fragments of a given file are available from other network stations of the network that are located within a predetermined maximum distance. The expression "a given file" is used for indicating a unique and unambiguously identifiable file. Is it not meant to limit the invention to one particular file or one particular file type. In case not all fragments of the given file are available from one or more network stations of the network that are located within the predetermined maximum distance the added further network station downloads a random fragment out of a set of missing fragments of the given file from a further network station that is farther away than the predetermined maximum distance. In case all fragments of the given file are available from one or more other network stations of the network that are located within the predetermined maximum distance the added network station determines a set of network stations located within the predetermined maximum distance. The so-determined set of network stations contains those network stations located closest to the added network station, while, in their totality, making available all fragments of the given file required for reconstructing the complete file. The added network station then downloads a fragment of the given file from that network station out of the previously determined set of network stations that is located farthest away.

In one embodiment of the inventive method the added further network station determines whether it has stored fragments of files, and which fragments of files it has presently stored.

In another embodiment of the inventive method the added further network station initially contains no stored content at all.

In yet another embodiment of the inventive method, none of the network stations stores all of fragments of a given file.

It is to be noted, that the network station that is farther away than the predetermined maximum distance may be a content server hosting all fragments of a file, or one or more a network stations out of a further group of network stations.

In yet another embodiment of the inventive method a content server determines, upon initialisation of the network, which fragments are to be stored by which network station. The initialisation process may also be considered a pre-push of content under the control of the content server. Once the initialisation of the network is terminated, further distribution of content may be depending upon individual requests from set-top boxes. The further distribution of content may also be considered as pre-fetch under the control of individual set-top boxes.

An electronic content distribution system according to the invention includes a network having at least two network stations. The network stations are adapted to perform the method described further above.

A network station of the electronic content distribution system according to the invention may include a network interface for sending and receiving commands and data. The network station may further include a microprocessor and program and data memory. The data memory may include volatile as well as non-volatile memory, in particular flash memory and magnetic or optical disk storage. The program memory of the network station may be programmed to perform the method steps described further above.

In one embodiment of the invention the network station is adapted for streaming of the fragments of a given file in a timely and ordered manner. Also, the network station according to the invention may be adapted for receiving fragments of a given file for reproduction or reconstruction of the file. In a preferred embodiment the network station is adapted for buffering received fragments of a given file while reproducing or reconstructing parts already received.

The inventive method results in a placement of file fragments such that, for any arbitrarily chosen set-top box, the distance to other set-top boxes storing the fragments required for complementing a file is minimised. The selection of which fragment to store locally is based on the fragments already stored by neighbouring set-top boxes.

In one embodiment, the method considers a restricted awareness of a newly added set-top box with respect to neighbouring set-top boxes and their respective stored content. However, the newly added set-top box knows how many fragments are required for reconstructing a given file. The newly added set-top box determines which fragments are available at its respective immediate neighbours, and downloads one or more missing fragments for local storage. The one or more fragments selected may be downloaded from a central server, or from other set-top boxes located further away. In case each set-top box is storing only one fragment of a file, the number of neighbours considered for the decision is the number of fragments of the file reduced by 1.

The fragments may be substantially equal in size, in terms of bytes, or, in case of video or audio files, may be selected according to the duration of playback, i.e. having substantially equal playback duration. However, set-top boxes having larger storage, or higher bandwidth, or lower overall cost for uploading, may take a larger fragment for storage. The decision depends on which parameter is to be optimized, e.g. network load distribution, or network traffic cost per set-top box, or per network segment, or the like.

In the following the invention will be described with reference to the drawings in which
- Figure 1: shows an exemplary system according to the invention;
- Figure 2: diagrammatically shows the distribution of file fragments to a newly added set-top box; and
- Figure 3: shows a block diagram of an exemplary set-top box according to the invention.

In the figures like or similar elements are referenced with the same reference numerals.

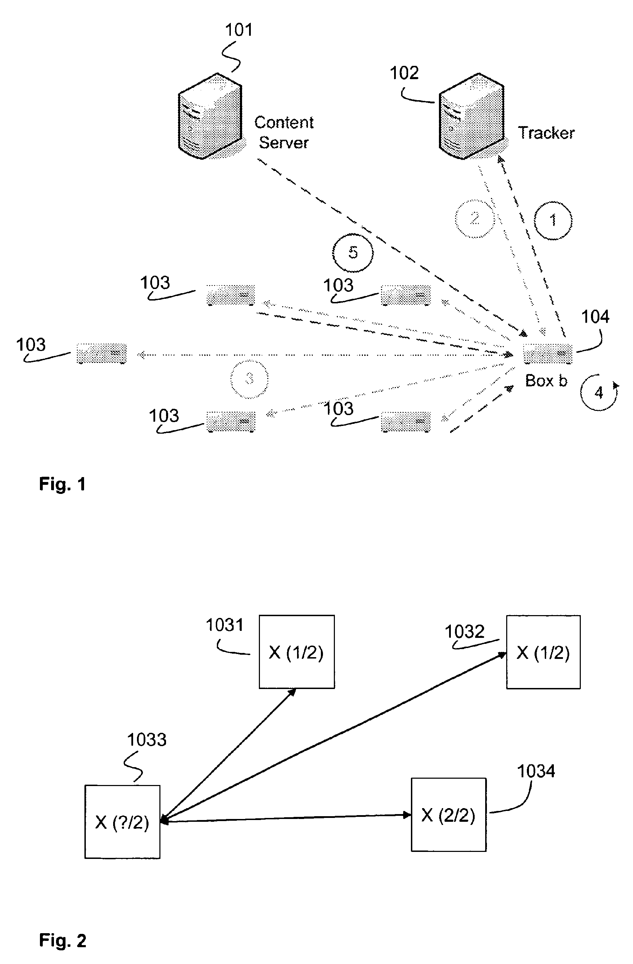

Figure 1 shows one example of a system in accordance with the invention. The system includes a content server 101, a tracker 102 and a number of set-top boxes 103, 104. Content server 101 is in charge of preparing, storing and sending content to set-top boxes 103, 104. Content server 101 may be a central server as well as a general content delivery network service. In the exemplary embodiment shown in this figure a BitTorrent-like peer discovery is assumed: tracker 102 is responsible for connecting all set-top boxes by sending lists of active set-top boxes to them. However, any other discovery protocol may be used. It is also assumed that set-top boxes 103, 104 do not store any substream initially. It is to be noted that set-top boxes 103, 104 may of course store a content before the initialisation, e.g. due to change of location of a set-top box within the network. The set-top boxes 103, 104 have to follow a defined protocol to decide which substream it should store, then download a substream so-determined.

When a new set-top box 104 joins in the network it sends a request to tracker 102. The new set-top box 104 joining the network is labelled "Box b" in the figure. As noted further above, in the exemplary embodiment the local storage of the newly added set-top box 104 is initially empty. The request to tracker 102 is indicated by the dashed arrow labelled "1". This request may also be sent when one of substreams stored in the set-top box becomes obsolete. In this case, the box also needs to request a new substream to replace the obsolete one.

Similar to the BitTorrent protocol, tracker 102 in the exemplary system is in charge of connecting all boxes. To this end it may maintain an index of all active set-top boxes. When it receives the request from newly added set-top box 104, tracker 102 sends back a list of active set-top boxes 103. Sending back the list of active set-top boxes 103 is indicated in the figure by the dashed arrow labelled "2". This results in building up an overlay network of set-top boxes 103, 104. It is to be noted that a tracker-less architecture can also be used, for example a distributed hash table (DHT) or pure distributed architecture.

Once the list of active set-top boxes 103 is received by newly added set-top box 104 (Box b), "Box b" measures its distance to all set-top boxes 103 in this list, and checks which substream the other set-top boxes 103 are actually storing. Setup box 104 then determines a 3-tuple data set consisting of a unique identifier of each set-top box 103 (boxID), a value for the distance and/or cost, and the substreams hosted for every set-top box 103 in the list. As mentioned further above, the definition of network distance or cost depends on the goal of optimization. For example, if network traffic is to be reduced, the number of router-level or AS-level hops may indicate the network distance. AS is an abbreviation for "Autonomous System", i.e. a system that is otherwise self-contained but allows for access to other autonomous systems. Newly added set-top box 104 determines which substream to stored locally based on the knowledge of both distance and content availability of neighbouring set-top boxes 103.

It is to be noted that the determination of the 3-tuple data set by the set-top box 104 itself may as well be replaced by a third party service external to the set-top box 104. For example, it is conceivable that tracker 102 integrates this service and directly provides the measurement results, e.g. as part of the list of active set-top boxes 103 sent upon the request issued by the newly added set-top box 104. A distributed distance estimation protocol as Vivaldi or Meridian could also be used.

Preferably the distance measurement takes into account the routing policies used during actual data download. For example, two set-top boxes 103 may be located in two directly connected ASes (Autonomous Systems), but unfortunately, the link between these two ASes is very costly. When AS1 downloads content from AS2, another route by a third AS (e.g. AS1 - AS3 - AS2) is actually used for data packets instead of the direct link. In this case, the route from AS1 to AS2 via AS3 should be used for distance calculation.

The newly added set-top box 104 decides which substream it should download, based on measurement results obtained in the previous step.

In order to limit the complexity of the calculations and reduce the network traffic caused by measurement itself, it may be useful to set a threshold δ. All set-top boxes 103 located at a distance greater than δ will not be measured and not be considered for making the decision.

Among all considered set-top boxes 103 variable C denotes the set of substreams already stored by the totality of these set-top boxes 103. Variable k denotes the number of substreams of a complete data file or video file. Once C is calculated, there are two possible scenarios:
|C| < k: this means that C is not containing all necessary substreams. In this case, newly added set-top box 104 downloads a random substream among all missing substreams of C from any source not part of the considered set-top boxes 103.
|C| = k: All substreams of a video or data file can be found in the neighbourhood of set-top box 104. In this case set-top box 104 will download and store the "furthest" substream. The "furthest" substream is defined as the one that will generate most cost if the set-top box 104 wants to retrieve a replica thereof using a defined routing protocol. It is to be noted that the "furthest" substream may be different from the substream stored by the furthest box.

Figure 2 shows an exemplary network to which a new set-top box is added and will be used in the following for elucidating the process of determining, which fragment is to be downloaded and stored.

In the example shown the total number of fragments of a file X is assumed k=2, i.e. file X is divided into 2 substreams or fragments 1/2, 2/2. The system includes set-top boxes 1031 and 1032, both storing fragment 1/2 of file X. Set-top box 1034 stores fragment 2/2 of file X. A new set-top box 1033 is added and discovers its three neighbours, set-top boxes 1031, 1032 and 1034. As mentioned before, each of them already hosts one substream. The new set-top box 1033 measures the distance to its neighbours and also checks which substreams they store. Then, new set-top box 1033 runs the inventive method for deciding which substream to store locally. In accordance with the invention it will choose the furthest substream which, in the example, is substream 2/2, rather than 1/2. This is, because set-top box 1031 already stores substream 1/2 and is located close to the set-top box 1033, while set-top box 1034 storing substream 2/2 is relatively farther away than set-top box 1031. Storing another copy of substream 1/2 would not reduce the overall distance of all required substreams, even though set-top box 1032 is located even farther away than set-top box 1034.

Set-top box 1033 may then download in parallel the selected substream from the content server and other active boxes storing this substream. Once the download is finished, the request sent by the newly added set-top box 1033 is accomplished.

The step described in the foregoing represent how one set-top box chooses one substream of a given file. Substreams of different files can be stored in the same set-top box. In accordance with one aspect of the invention, an independent service may determine the set of files to be stored in each set-top box. This service may also take into account the popularity of the file, user preference, and the like. Once the set of files is determined, the respective fragments are placed in the set-top box in accordance with the method described in this specification.

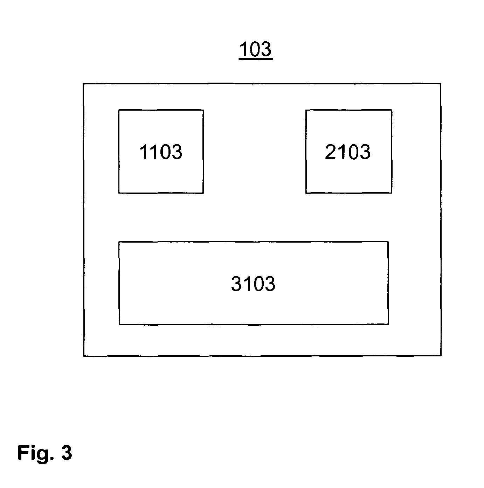

Figure 3 shows a block diagram of a set-top box 103 in accordance with the invention. The set-top box includes a network interface 1103 for sending and receiving data and commands or requests. Further, a microprocessor 2103 is provided, that is adapted to perform the inventive method. The microprocessor may be accompanied by a memory 3103 for executing a program. The memory may include flash memory, SRAM, SDRAM or optical or magnetical storage, or a combination thereof.

The invention described in the foregoing provides an improved way of content allocation/placement for a content distribution network (CDN) that is so-called "box-powered", i.e. using distributed set-top boxes of users for storage and distribution. This invention advantageously improves the efficiency of the distribution and the traffic associated. Also, the invention advantageously allows for distributed management of the content distribution. Yet further, the inventive method is highly adaptive. Service providers may define different own distance / cost parameters and achieve a fully customized optimization.

## Claims

1. Method of operating a network station in an electronic content distribution network, the network comprising at least one further network station, the network stations being adapted for storing content and for retrieving stored content, wherein the stored content is organised in files, wherein the files are divided into fragments, the totality of fragments of a given file being required for reconstructing the given file, wherein one or more fragments of a given file are stored in respective different network stations, the method being **characterised by** performing the following steps when adding the network station to the network:
- the network station determining which fragments of the given file are available from further network stations of the network that are located within a predetermined maximum distance;
wherein, in case not all fragments of the given file are available from one or more further network stations of the network that are located within the predetermined maximum distance, the method further includes the step of:
- the network station downloading a random fragment out of a set of missing fragments of the given file from a further network station that is located farther away than the predetermined maximum distance;
wherein, in case all fragments of the given file are available from one or more further network stations of the network that are located within the predetermined maximum distance, the method further includes the steps of:
- the network station determining a set of further network stations located within the predetermined maximum distance, the determined set containing those further network stations located closest to the network station while making available all fragments of the given file required for reconstructing the complete file; and
- the network station downloading a fragment of the given file from that network station out of the determined set of further network stations that is located farthest away.

2. The method of claim 1, further including the network station not storing all fragments of a given file.

3. The method of claim 1, further including the network station storing fragments of a predetermined maximum size.

4. The method of claim 1, further including the network station storing fragments of files representing contiguous or non-contiguous parts of the respective total file.

5. The method of claim 1, further including the network station determining which fragments of files it has presently stored.

6. The method of claim 1, further including the network station initially not having stored content.

7. The method of claim 1, further including the network station being farther away than the predetermined maximum distance acting as a content server hosting all fragments of a file.

8. The method of claim 1, including, upon initialisation of the network, the network station receiving information from a content server which fragments are to be stored.

9. The method of claim 1, further including calculating the distance based upon network cost, router hops, transmission latency, transmission delay, or a combination thereof.

10. Network station of an electronic content distribution system, the network station including a network interface for sending and receiving commands and data, a microprocessor and program and data memory, wherein the network station is adapted to perform the method according to any one of claims 1 to 9.

11. The network station of claim 10, wherein the network station is adapted for streaming of fragments of a file in a timely and ordered manner, and/or for receiving and buffering received fragments of a file while reproducing parts of the file already available at the network station.

12. Electronic content distribution system including a network having at least two network stations according to claim 10 or 11.

## Patentansprüche

1. Verfahren zum Betreiben einer Netzstation in einem elektronischen Inhaltsverteilungsnetz, wobei das Netz mindestens eine weitere Netzstation umfasst, wobei die Netzstationen zum Speichern von Inhalt und zum Abrufen von gespeichertem Inhalt ausgelegt sind, wobei der gespeicherte Inhalt in Dateien organisiert ist, wobei die Dateien in Fragmente unterteilt sind, wobei die Gesamtheit der Fragmente einer gegebenen Datei für die Rekonstruktion der gegebenen Datei erforderlich ist, wobei eines oder mehrere Fragmente einer gegebenen Datei jeweils in unterschiedlichen Netzstationen gespeichert sind, wobei das Verfahren **dadurch gekennzeichnet ist, dass** die folgenden Schritte ausgeführt werden, wenn die Netzstation zu dem Netz hinzugefügt wird:
- die Netzstation bestimmt, welche Fragmente einer gegebenen Datei von weiteren Netzstationen des Netzes, die sich innerhalb einer vorgegebenen maximalen Entfernung befinden, verfügbar sind;
wobei, falls nicht alle Fragmente einer gegebenen Datei von einer oder von mehreren weiteren Netzstationen des Netzes, die sich innerhalb der vorgegebenen maximalen Entfernung befinden, verfügbar sind, das Verfahren ferner den folgenden Schritt enthält:
- die Netzstation lädt ein beliebiges Stück aus einer Menge fehlender Fragmente der gegebenen Datei von einer weiteren Netzstation, die sich weiter entfernt als die vorgegebene maximale Entfernung befindet, herunter;
wobei, falls alle Fragmente der gegebenen Datei von einer oder von mehreren weiteren Netzstationen des Netzes, die sich innerhalb der vorgegebenen maximalen Entfernung befinden, verfügbar sind, das Verfahren ferner die folgenden Schritte enthält:
- die Netzstation bestimmt eine Menge weiterer Netzstationen, die sich innerhalb der vorgegebenen maximalen Entfernung befinden, wobei die bestimmte Menge jene weiteren Netzstationen enthält, die sich am nächsten zu der Netzstation befinden, während alle Fragmente der gegebenen Datei, die für die Rekonstruktion der vollständigen Datei erforderlich sind, verfügbar gemacht werden; und
- die Netzstation lädt ein Fragment der gegebenen Datei von jener Netzstation aus der bestimmten Menge weiterer Netzstationen, die sich am weitesten weg befindet, herunter.

2. Verfahren nach Anspruch 1, das ferner enthält, dass die Netzstation nicht alle Fragmente einer gegebenen Datei speichert.

3. Verfahren nach Anspruch 1, das ferner enthält, dass die Netzstation Fragmente mit einer vorgegebenen maximalen Größe speichert.

4. Verfahren nach Anspruch 1, das ferner enthält, dass die Netzstation Fragmente von Dateien, die zusammenhängende oder nicht zusammenhängende Teile der jeweiligen Gesamtdatei repräsentieren, speichert.

5. Verfahren nach Anspruch 1, das ferner enthält, dass die Netzstation bestimmt, welche Fragmente von Dateien sie gegenwärtig gespeichert hat.

6. Verfahren nach Anspruch 1, das ferner enthält, dass die Netzstation anfangs keinen gespeicherten Inhalt besitzt.

7. Verfahren nach Anspruch 1, das ferner enthält, dass die Netzstation, die weiter als die vorgegebene maximale Entfernung entfernt ist, als ein Inhaltsserver wirkt, der alle Fragmente einer Datei hostet.

8. Verfahren nach Anspruch 1, das enthält, dass die Netzstation bei Initialisierung des Netzes von einem Inhaltsserver Informationen empfängt, welche Fragmente zu speichern sind.

9. Verfahren nach Anspruch 1, das ferner das Berechnen der Entfernung auf der Grundlage der Netzkosten, der Routersprünge, der Übertragungslatenzzeit, der Übertragungsverzögerung oder einer Kombination davon enthält.

10. Netzstation eines elektronischen Inhaltsverteilungssystems, wobei die Netzstation eine Netzschnittstelle zum Senden und Empfangen von Befehlen und Daten, einen Mikroprozessor und Programm- und Datenspeicher enthält, wobei die Netzstation zum Ausführen des Verfahrens nach einem der Ansprüche 1 bis 9 ausgelegt ist.

11. Netzstation nach Anspruch 10, bei der die Netzstation für das Streaming von Fragmenten einer Datei auf rechtzeitige und geordnete Weise und/oder zum Empfangen und Puffern empfangener Fragmente einer Datei, während bereits bei der Netzstation verfügbare Teile der Datei wiedergegeben werden, ausgelegt ist.

12. Elektronisches Inhaltsverteilungssystem, das ein Netz enthält, das mindestens zwei Netzstationen nach Anspruch 10 oder 11 aufweist.

## Revendications

1. Procédé d'exploitation d'une station de réseau dans un réseau de distribution de contenu électronique, le réseau comprenant au moins une autre station de réseau, les stations du réseau étant adaptées au stockage de contenu et à l'extraction de contenu stocké, dans lequel le contenu stocké est organisé en fichiers, dans lequel les fichiers sont répartis en fragments, la totalité des fragments d'un fichier donné étant requise pour la reconstruction du fichier donné, dans lequel un ou plusieurs fragments d'un fichier donné sont stockés dans des stations de réseau respectives, le procédé étant **caractérisé par** l'exécution des étapes suivantes lors de l'addition de la station de réseau au réseau :
- la station de réseau déterminant quels fragments du fichier donné sont disponibles depuis les autres stations du réseau qui sont situées dans une distance maximale prédéterminée ;
où, si tous les fragments du fichier donné ne sont pas disponibles depuis une ou plusieurs autres stations du réseau qui sont situées dans la distance maximale prédéterminée, le procédé inclut en outre l'étape suivante :
- la station de réseau téléchargeant un fragment aléatoire depuis un ensemble de fragments manquants du fichier donné depuis une autre station de réseau qui est située au-delà de la distance maximale prédéterminée ;
où, si tous les fragments du fichier donné sont disponibles depuis une ou plusieurs stations de réseau du réseau qui sont situées dans la distance maximale prédéterminée, le procédé inclut en outre les étapes suivantes :
- la station de réseau déterminant un ensemble d'autres stations de réseau situées dans la distance maximale prédéterminée, l'ensemble déterminé contenant ces autres stations de réseau situées le plus près de la station de réseau tout en rendant disponibles tous les fragments du fichier donné requis pour la reconstruction du fichier complet ; et
- la station de réseau téléchargeant un fragment du fichier donné de cette station de réseau parmi l'ensemble déterminé d'autres stations de réseau situé le plus loin.

2. Procédé selon la revendication 1, incluant en outre la station de réseau ne stockant pas tous les fragments d'un fichier donné.

3. Procédé selon la revendication 1, incluant en outre la station de réseau stockant des fragments d'une taille maximale prédéterminée.

4. Procédé selon la revendication 1, incluant en outre la station de réseau stockant des fragments de fichiers représentant des parties contiguës ou non-contiguës du fichier entier respectif.

5. Procédé selon la revendication 1, incluant en outre la station de réseau déterminant quels fragments de fichiers elle a en stock.

6. Procédé selon la revendication 1, incluant en outre la station de réseau n'ayant initialement aucun contenu stocké.

7. Procédé selon la revendication 1, incluant en outre la station de réseau située au-delà de la distance maximale prédéterminée agissant en tant que serveur de contenu hébergeant tous les fragments d'un fichier.

8. Procédé selon la revendication 1, incluant, à l'initialisation du réseau, la station de réseau recevant des informations d'un serveur de contenu dont les fragments doivent être stockés.

9. Procédé selon la revendication 1, incluant en outre le calcul de la distance sur la base du coût du réseau, des sauts de routeur, des décalages de transmission, des retards de transmission et d'une combinaison de ces derniers.

10. Station de réseau d'un système de distribution de contenu électronique, la station de réseau incluant une interface réseau pour l'envoi et la réception de commandes et de données, un microprocesseur et une mémoire de programme et de données, dans laquelle la station de réseau est adaptée pour réaliser le procédé conformément à l'une quelconque des revendications 1 à 9.

11. Station de réseau selon la revendication 10, dans laquelle la station de réseau est adaptée à la diffusion de fragments d'un fichier de manière ponctuelle et ordonnée, et/ou à la réception et à la mise en mémoire-tampon de fragments reçus d'un fichier tout en reproduisant des parties du fichier déjà disponible à la station de réseau.

12. Système de distribution de contenu électronique incluant un réseau disposant d'au moins deux stations de réseau, conformément à la revendication 10 ou 11.
